Europäisches Patentamt

European Patent Office

Office européen des brevets

(11) Numéro de publication: **0 057 649**
**B1**

(12) **FASCICULE DE BREVET EUROPEEN**

(45) Date de publication du fascicule du brevet: 29.05.85

(51) Int. Cl.⁴: **B 63 G 8/38**

(21) Numéro de dépôt: **82400184.6**

(22) Date de dépôt: **04.02.82**

(54) **Mécanisme de hissage et affalage d'un mât mobile en rotation dans un sous-marin.**

(30) Priorité: **04.02.81 FR 8102098**

(43) Date de publication de la demande:
**11.08.82 Bulletin 82/32**

(45) Mention de la délivrance du brevet:
**29.05.85 Bulletin 85/22**

(84) Etats contractants désignés:
**AT BE CH DE FR GB IT LI LU NL SE**

(56) Documents cités:
**FR-A-2 271 428**
**FR-A-2 288 671**

(73) Titulaire: **SOCIETE D'OPTIQUE, PRECISION ELECTRONIQUE ET MECANIQUE - SOPELEM 102 rue Chaptal F-92300 Levallois-Perret (FR)**

(72) Inventeur: **Nollez, Jacques 7 rue Pierre Sémard F-75009 Paris (FR)**
Inventeur: **Ragain, Jacques 31 avenue Raspail F-95330 Domont (FR)**
Inventeur: **Prevost, Marc 6bis avenue de Rottembourg F-75012 Paris (FR)**

(74) Mandataire: **Phélip, Bruno et al c/o Cabinet Harlé & Phélip 21, rue de la Rochefoucauld F-75009 Paris (FR)**

Courier Press, Leamington Spa, England.

EP 0 057 649 B1

# Description

La présente invention se rapporte à un mécanisme de hissage et affalage d'un mât guidé selon son axe longitudinal dans un sous marin pourvu d'une coque épaisse, comportant un vérin pourvu d'un piston et logé a la partie inférieure du mât pour le déplacer.

L'invention s'applique au hissage et affalage d'un mât optronique porteur d'une caméra ou d'une antenne périscopique de veille radar.

Le mécanisme de hissage et d'affalage du FR.A2 288 671 comporte un vérin de hissage du mât dont le piston est ancré au bas de la coque épaisse à l'intérieur du sous-marin. Le cylindre n'est pas indépendant du mât et le piston est ancré au bas de la coque épaisse, à l'interieur du sous-marin, le mât et le vérin traversant la coque épaisse. Le vérin dépourvu de tige ne sert qu'au hissage.

La présente invention a pour but de fournir un mécanisme de hissage et affalage vertical d'un mât rotatif, fonctionnant à double effet et pouvant être monté au-dessus de la coque épaisse d'un sous-marin de manière à éviter de traverser cette coque par des parties mobiles. Ce mécanisme procure un encombrement réduit.

Le mécanisme selon l'invention est caractérisé par le fait que le bas du mât est équipé d'une suspension liée au mât tont en assurant un coulissement vertical du mât au-dessus de la cogne épaisse et permettant la rotation de ce dernier et que le vérin comporte un cylindre qui est solidiare de la dite suspension et une tige dont l'extrémité inférieure est attelée par un point d'ancrage à la partie supérieure de la coque épaisse.

Selon un mode particulier de realisation de l'invention, la tige du vérin comporte des conduits d'alimentation en huile de la chambre supérieure et de la chambre inférieure du vérin de manière que. Les entrées desdits conduits soient situées sous la cogne épaisse.

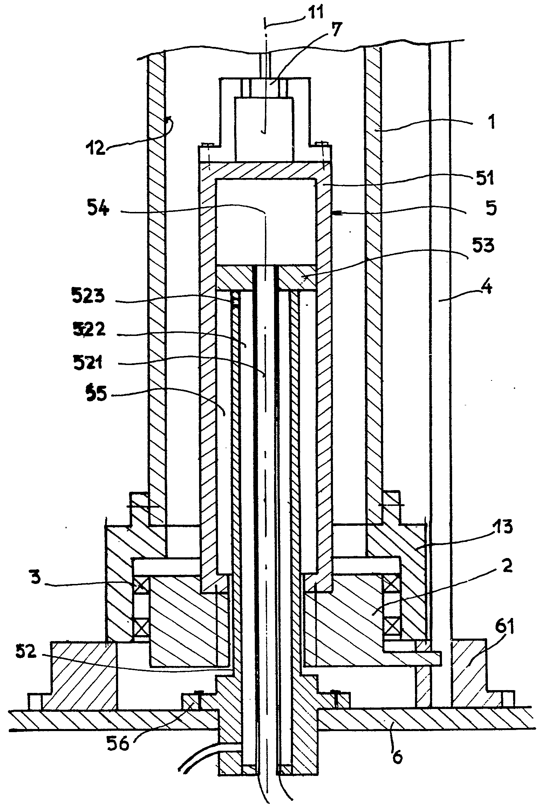

L'invention va maintenant être décrite avec plus de détails en se référant à un mode de réalisation donnée à titre d'exemple et représenté par le dessin annexé.

La figure unique est une coupe, par l'axe vertical du mât, du mécanisme selon l'invention.

Le mât ou tube 1 servant de mât optronique ou d'antenne périscopique est monté dans un sous-marin. Ce mât est guidé verticalement selon son axe longitudinal 11 par des paliers de guidage de manière connue en soi. Ces paliers de guidage permettent le coulissement et le pivotement du mât selon cet axe vertical 11 et assurent l'étanchéité. Une suspension 2 est montée à la partie inférieure du mât et au-dessous des paliers, par l'intermédiaire d'un palier à roulements 3 qui permet la rotation relative du mât et de la suspension tout en assurant la liaison verticale de cette suspension par rapport au mât. La suspension 2 peut coulisser verticalement au-dessus de la coque épaisse 6. On rail vertical 4 immobilise cette suspension en rotation. Le mât est entrainé en rotation autour de son axe longitudinal 11 par un moteur non représenté.

Un vérin 5 est monté tige vers le bas en reliant la suspension 2 à la coque épaisse 6 située au-dessous et de manière à être situé au-dessus de cette coque. Le cylindre 51 du vérin est logé dans l'alésage 12 du mât 1 en étant monté de manière que le fond soit au-dessus et que le côté tige soit au-dessous. Ce cylindre est monté au-dessus de la suspension 2 et en est solidaire. La tige 52 du vérin qui est solidaire par son extrémité supérieure du piston 53 passe au travers de la suspension 2. Elle est fixe, son extrémité inférieure étant attachée au-dessous du mât par une liaison d'ancrage fixe 56 ou par une articulation à la partie supérieure de la coque épaisse 6 de manière que le vérin soit monté, tige vers le bas, au-dessus et à l'extérieur de la coque épaisse. De préférence, le vérin est monté coaxialement au mât.

Dans la tige 52 sont ménagés deux conduits d'alimentation en huile 521 et 522 alimentant en huile respectivement la chambre supérieure 54 logée entre le piston 53 et le fond du cylindre et la chambre inférieure 55 située sous le piston 53. Le conduit d'alimentation 521 de la chambre supérieure 54 est formé par un tube axial qui débouche au travers du piston 53 et qui est logé dans un alésage de la tige. L'espace annulaire formé dans cet alésage autour du tube axial constitue le conduit 522 qui débouche dans la chambre 55 par l'intermédiaire d'ouvertures 523 ménagées à la partie supérieure de la tige.

Les conduits 521 et 522 passent au travers de la coque épaisse 6 au niveau de la coque épaisse 6 de manière que les entrées soient situées au-dessous à l'intérieur de ladite coque épaisse ce qui permet une bonne sécurité et un accès facile.

La partie supérieure du cylindre de vérin mobile en translation porte par une pièce de support un joint tournant 7 qui permet la liaison électrique avec la partie supérieure du mât. Les descentes de câbles se font alors le long de ce cylindre, dans l'espace annulaire compris entre le cylindre et l'alésage intérieur du mât.

Le mât est pourvu à son extrémité inférieure d'une pièce d'assise 13. Cette pièce d'assise 13 peut reposer sur un butoir 61 solidaire d'une partie fixe de manière à éviter de faire supporter tout le poids au vérin qui risquerait de flamber.

Le fonctionnement du mécanisme va maintenant être expliqué.

Lorsque la haute pression est envoyée dans la chambre 54, le cylindre 51 se soulève et hisse le mât. Lorsque la chambre inférieure 55 est soumise à la haute pression et que la chambre supérieure 54 est soumise à la basse pression, le cylindre 51 descend et affale le mât. Le mécanisme a un fonctionnement à double effet.

# Revendications

1. Mécanisme de hissage et affalage d'un mât (1) guidé selon son axe longitudinal dans un sous-marin pourvu d'une coque épaisse comportant un vérin (5) pourvu d'un piston (53) et logé à la partie inférieure du mât pour le déplacer, caractérisé par le fait que le base du mât est équipé d'une suspension (2) liée au mât tout en assurant un coulissement vertical du mât au-dessus de la cogne épaisse et permettant la rotation de ce dernier et que le vérin (5) comporte un cylindre (51) qui est solidaire de la dite suspension (2) et un tige (52) dont l'extrémité inférieure est attelée par un point d'ancrage (56) à la partie supérieure de la coque épaisse (6).

2. Mécanisme selon la revendication 1, caractérisé par le fait que le vérin est du type à double effet.

3. Mécanisme selon la revendication 1 ou 2, caractérisé par le fait que la tige (52) du vérin comporte des conduits d'alimentation (521—522) en huile de la chambre supérieure (54) et de la chambre inférieure (55) du vérin de manière que les entrées des dits conduits, soient situées sous la coque épaisse.

4. Mécanisme selon l'une quelconque des revendications précédentes, caractérisé par le fait que le cylindre (51) est monté au-dessus de la suspension (2).

5. Mécanisme selon l'une quelconque des revendications précédentes, caractérisé par le fait qu'il comporte des moyens (4) pour immobiliser la suspension (2) en rotation, le mât (1) étant entrainé en rotation par un moteur.

**Patentansprüche**

1. Hebe- und Senkmechanismus für einen Mast (1), der entlang seiner Längsachse in einem U-Boot geführt wird, das mit einer dicken Rumpfschale versehen ist, die eine Hebeeinrichtung (5) mit einem Kolben (53) aufweist, die am unteren Teile des Mastes gelagert ist, um ihn zu verschieben, dadurch gekennzeichnet, daß der untere Abschnitt bzw. die Basis des Mastes mit einer Aufhängung (2) versehen ist, die mit dem Mast verbunden ist, eine gleitende vertikale Verschiebung des Mastes oberhalb der dicken Rumpfschale gewährleistet und die Drehung des Mastes zuläßt und daß die Hebeeinrichtung (5) einen Zylinder (51), der fest mit der Aufhängung (2) verbunden ist und einen Schaft (52) aufweist, dessen unteres Ende mittels eines Verankerungspunktes (56) am oberen Abschnitt der dicken Rumpfschale (6) befestigt ist.

2. Mechanismus nach Anspruch 1, dadurch gekennzeichnet, daß die Hebeeinrichtung Doppel wirkung besitzt.

3. Mechanismus nach Anspruch 1 oder 2, dadurch gekennzeichnet, daß der Schaft (52) der Hebeeinrichtung Zufuhrleitungen (521—522) für Öl für die obere Kammer (54) und die untere Kammer (55) der Hebeeinrichtung umfaßt, deren Einlässe unterhalb der dicken Rumpfschale gelegen sind.

4. Mechanismus nach einem der vorhergehenden Ansprüche dadurch gekennzeichnet, daß der Zylinder (51) unterhalb der Aufhängung (2) montiert ist.

5. Mechanismus nach einem der vorhergehenden Ansprüche dadurch gekennzeichnet, daß er mit einer Einrichtung (4) zur Sperrung der Rotation der Aufhängung (2) versehen ist und daß der Mast von einem Motor gedreht wird.

**Claims**

1. Mechanism for raising and lowering a mast (1) guided in the direction of its longitudinal axis in a submarine provided with a thick hull, comprising an actuator (5) provided with a piston (53) and housed at the bottom of the mast for the displacement of the latter, characterised by the fact that the bottom of the mast is equipped with a suspension (2) connected to the mast, allowing the vertical sliding of the mast above the thick hull and permitting the rotation of the mast, and that the actuator (5) comprises a cylinder (51) which is fastened to the suspension (2) and a rod (52) the bottom end of which is attached by an anchorage point (56) to the top part of the thick hull (6).

2. Mechanism according to Claim 1, characterised by the fact that the actuator is of the double acting type.

3. Mechanism according to Claim 1 or 2, characterised in that the rod (52) of the actuator is provided with oil supply ducts (521—522) for the upper chamber (54) and the lower chamber (55) of the actuator, in such a manner that the inlets of these ducts are situated under the thick hull.

4. Mechanism according to any of the preceding claims, characterised by the fact that the cylinder (51) is mounted above the suspension (2).

5. Mechanism according to any of the preceding claims, characterised by the fact that it is provided with means (4) for securing the suspension (2) against rotation, the mast (1) being driven rotationally by a motor.

0 057 649

1